# EUROPEAN PATENT APPLICATION

(11) **EP 0 829 669 A1**
(43) Date of publication of application: **18.03.1998**
(21) Application number: 97306553.5
(22) Date of filing: 27.08.1997
(51) Int. Cl.: F16K 47/16

(54) **Needle Valve**

(30) Priority: 30.08.1996 GB 9618122
(71) Applicant: ALEXANDER CONTROLS LIMITED, Birmingham B35 6AD (GB)
(72) Inventor: Selini, Paul, Dosthill, Staffs B77 1JH (GB); Bailey, William, Banbury, Oxfordshire OX16 7HA (GB); Page, Michael, Barton Under Needwood, Staffs DE13 8JJ (GB)
(74) Representative: Barnfather, Karl Jon, Dr.

(57) **Abstract**

A needle valve for controlling fluid flow comprising a needle (15), a seat (25), an actuator (1) for moving the needle over a predetermined displacement between an open and closed position in which the needle abuts the seat, lost motion means (13,17,19,30) for allowing movement of the actuator after moving the needle into a closed position, and means (10,32) to enable adjustment of the maximum extent of displacement of the needle towards the closed position.

## Description

This invention relates to needle valves for controlling fluid flow.

One particular design of needle valve is used for sub-sea situations especially in the oil industry, where the valve is to be operated by a possibly remote controlled unmanned submersible vehicle. The valve is opened or closed by a movement of less than 360° of an external knob which is usually a tee-shaped handle. The problem is to ensure that the valve is fully opened or closed by the movement, and to avoid damage through excess movement.

This problem is solved by the present invention which provides for lost motion against a spring when the closing movement of the needle is completed, and by the use of an adjustable stop which can be individually assembled in position so as to control the maximum extent of displacement of the needle towards the closed position.

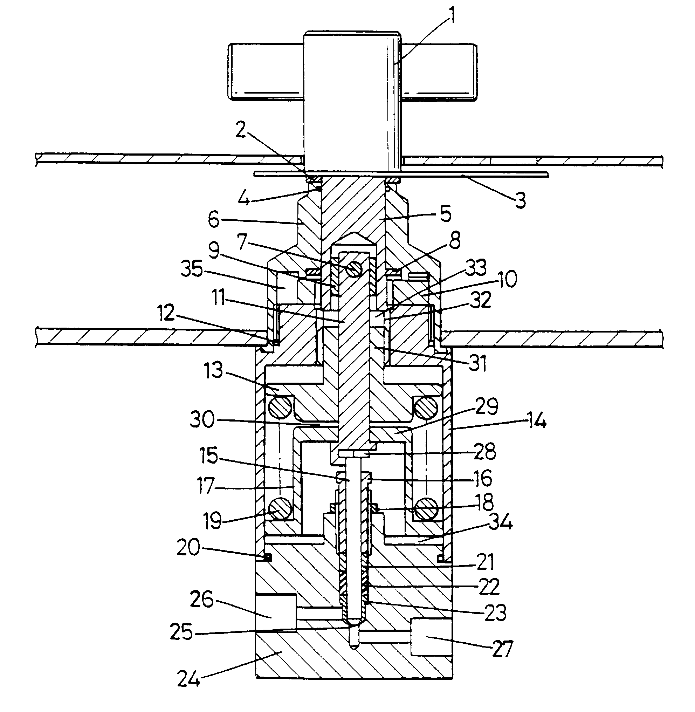

One embodiment of the invention will now be more particularly described with reference to the accompanying drawing wherein the sole view is a sectional elevation.

The needle per se is indicated by the reference 15 and seats at 25 so as to prevent flow through the passage system 26,27. The needle has a flange 28 at its opposite end and this is engaged in a shoe at the foot of stem 11. The stem extends through a pair of spring carriers 13,17 which between them locate a helical compression spring 19.

A lower ( in the drawing) spring carrier 17 is generally inverted cup shaped and its base 29 is, in the illustration showing a valve in the closed position and in this particular instance, spaced from the upper spring carrier 13 by clearance 30.

The upper spring carrier has a male screw threaded spigot 31 engaged in a female screw threaded bore in neck 32 of housing 14, which is secured to the valve body 24, in which the mentioned passage 26,27 is formed.

The upper end of the spigot 31 has a pair of diametrically related dogs which are located in the space 33, although not seen in the drawing.

Knob 1 is integral with stem adaptor 5 which has an internal chamber to accommodate the upper end of the stem 11, and the stem end is maintained captive therein by a collar 9 and cotter pin 7. The lower end of adaptor 5 is adapted to engage the dogs for example by a pair of diametrically located cut-away portions also not seen in the drawing.

Hence considering the construction thus far described, angular movement i.e. rotation of the knob 1 drives the upper spring carrier axially because of the screw threaded engagement between the spigot 31 and the fixed housing part 32. Due to the compression spring, this also displaces the lower spring carrier 17 and hence the stem 11 and the needle 15. The existence of clearance 30 in the closed position means that the load on the needle is controlled by the compression of the spring. It is also necessary for clearance 34 to exist between the lower spring carrier and the valve body.

The valve is completed by top cover 6 which surrounds the stem adaptor and is engaged with the exterior of the part 32 and this creates a further chamber 35 which locates stop part 10. This comprises a ring with a radially projecting portion which co-operates with an abutment (not seen in this view) formed on the upper end surface of the neck 32. The ring is angularly fast, but adjustable in position, on the stem adaptor 5 for example by co-operating splines or hexagonal formations on the exterior of the stem adaptor and the bore of the ring at the point where they interfit.

Hence in assembly, it is possible to have the needle seated under a desired spring pressure as represented by appropriate clearances, and then locate the ring in an appropriate angular position relative to the stem adaptor so that the stop and abutment faces are engaged. It will be appreciated that the needle can be in the seated position with the knob and cover removed so as to facilitate this setting up stage in assembly because the spring compression is held by the inter-engaged screw threads on the parts 31 and 32.

It will also be appreciated that if a hexagonal formation is selected for the exterior of the stem adaptor, using a ring with a hexagonal bore, the radial stop could be adjusted in only 60° increments. It is preferred to use a larger number as might be possible for example by using the hexagonal external shape but providing the ring with a twelve sided bore so that it could be adjusted in 30° increments. When the ring has been located, with the needle in the ordinary spring-held closed position, any possible additional travel of the top spring carrier through additional angular movement of the knob to take the radial projection against the abutment face is insufficient to take up the total clearance 34, so that the needle remains held seated merely by spring force. It will also be appreciated that if the movement is sufficient to take up the clearance 30 so that it no longer exists, the spring provides maximum loading at that point.

## Claims

1. A needle valve for controlling fluid flow comprising a needle, a seat, an actuator for moving the needle over a predetermined displacement between an open and closed position in which the needle abuts the seat, lost motion means (13,17,19,30) for allowing movement of the actuator after moving the needle into a closed position, and means (10,32,34) to enable adjustment of the maximum extent of displacement of the needle towards the closed position.

2. A valve according to Claim 1 wherein the lost motion means comprises a pair of spring carriers (13,17) and a spring (19) for biasing the carriers apart.

3. A valve according to Claim 2 wherein one of the carriers comprises a base (29) separated from the other carrier by a clearance (30).

4. A valve according to Claim 3 wherein the other of the carriers comprises a member (31) for threadingly engaging a co-operating member in the housing (14).

5. A valve according to Claim 4 wherein the housing co-operating member comprises a threaded neck (32) and the carrier member (31) comprises a threaded spigot.

6. A valve according to Claim 4 or 5 wherein the carrier member comprises a pair of dogs for co-operating with the actuator.

7. A valve according to any preceding Claim wherein the actuator comprises a knob (1) and a stem (5) for effecting a movement of the needle.

8. A valve in accordance with Claims 6 and 7 wherein the actuator stem (5) comprises cut-away portions for co-operating with the dogs.

9. A valve according to any preceding Claim wherein the needle comprises a stem (11) which operably passes through the spring carriers.

10. A valve according to Claim 9 wherein the needle stem comprises means for abutting the one of the members.

11. A valve according to Claim 9 or 10 wherein the needle comprises a flange (28) engageable in a shoe in the needle stem (11).

12. A valve according to any preceding Claim wherein the adjustment means comprises a stop (10) carried on the actuator which operably co-operates with the housing (14).

13. A valve according to Claim 12 wherein the stop comprises a radially projecting portion and the housing comprises an abutment on said housing co-operating member (32).

14. A valve according to Claims 12 or 13 wherein the stop comprises a ring angularly fast but adjustable in position on said actuator.

15. A valve according to any one of Claims 1 to 14 wherein a clearance (34) is provided between the lost motion means and the valve housing.

16. A valve according to Claim 15 wherein the clearance (34) is provided between one of the carriers and the valve housing.
